# EUROPEAN PATENT SPECIFICATION

(11) **EP 3 925 794 B1**
(45) Date of publication and mention of the grant of the patent: **05.07.2023**
(21) Application number: 21173846.3
(22) Date of filing: 14.05.2021
(51) Int. Cl.: B60C 9/30, B60C 9/20, B60C 15/00, B60C 9/17

(54) **PNEUMATIC TIRE**
LUFTREIFEN
PNEUMATIQUE

(30) Priority: 18.06.2020 JP 2020105554
(43) Date of publication of application: 22.12.2021
(73) Proprietor: Sumitomo Rubber Industries, Ltd., Kobe-shi, Hyogo-ken 651-0072 (JP)
(72) Inventor: ISHIGAKI, Yuichi, Kobe-shi, 651-0072 (JP); MORI, Koji, Kobe-shi, 651-0072 (JP)
(74) Representative: Manitz Finsterwald Patent- und Rechtsanwaltspartnerschaft mbB

(56) References cited:
- EP-A1- 1 985 468
- EP-A1- 2 196 330
- EP-A2- 1 792 756
- WO-A1-2014/126701
- JP-A- 2007 111 944

## Description

### Technical field

The present invention relates to a pneumatic tire with a carcass.

### Background art

Conventionally, a pneumatic tire having a carcass composed of a plurality of carcass plies is known.
The following Patent Document 1 discloses a pneumatic tire provided with a first carcass ply, and a second carcass ply disposed on the outer side of the first carcass ply, wherein turned-up portions of the first carcass ply are made higher than turned-up portions of the second carcass ply.Patent Document 1: Japanese Patent Application Publication No. 2019-11205. Further prior art tires are known from EP 2 196 330 A1, EP 1 792 756 A2, EP 1 985 468 A1, JP 2007 111944 A, and WO 2014/126701 A1.

### Summary of the invention

### Problems to be solved by the invention

In the pneumatic tire according to Patent Document 1, owing to the turned-up portions of the two carcass plies having different heights, the tire may have improved cut resistance and durability. However, in the pneumatic tire according to Patent Document 1, it is necessary to prepare two types of carcass ply materials for the first carcass ply and second carcass ply, having different ply/material lengths in order to form the carcass. This increases the tire manufacturing cost including the management cost of the material.

The present invention was made in view of the above circumstances, and a primary objective of the present invention is to provide a pneumatic tire capable of reducing manufacturing costs while maintaining good cut resistance and durability.

According to the present invention, a pneumatic tire comprises: a tread portion, a pair of sidewall portions, a pair of axially spaced first and second bead portions, and a carcass extending between the first and second bead portions through the tread portion and the sidewall portions, wherein
the carcass is composed of a plurality of carcass plies including a first carcass ply having a ply length, and a second carcass ply having a ply length which is the same as the ply length of the first carcass ply, and
each of the first carcass ply and the second carcass ply is arranged asymmetrically with respect to a tire equator.

The first carcass ply is folded back radially outwardly in the first bead portion so as to have a folded-back portion having a first edge, and the first carcass ply has a second edge positioned in the second bead portion and radially inside the first edge.

The first carcass ply may be not folded back in the second bead portion.

The first carcass ply may be folded back in the second bead portion so as to have a folded-back portion having the above-said second edge which is positioned radially inside the first edge.

It is desirable that the second carcass ply is folded back radially outwardly in the second bead portion so as to have a folded-back portion having a third edge, and the second carcass ply has a fourth edge positioned in the first bead portion and radially inside the third edge.It is desirable that a distance in the tire radial direction between the first edge and the fourth edge is not less than 10 mm.

The carcass further comprises a third carcass ply which is, in the tread portion, located radially inside the first carcass ply and the second carcass ply, wherein the third carcass ply is folded back radially outwardly in the first bead portion so as to have a folded-back portion having a fifth edge, and
the third carcass ply is folded back radially outwardly in the second bead portion so as to have a folded-back portion having a sixth edge and wherein the fifth edge and the sixth edge are located at the same radial height.

It is desirable that the fifth edge and the sixth edge are located radially outside the first edge.

Each of the carcass plies is composed of carcass cords rubberized with a topping rubber, wherein
the carcass cords each have a cord strength F (N),
the carcass cords are arranged side by side with a cord count N per 5 cm,
the topping rubber has a complex elastic modulus E* (MPa) at 70 degrees C, and
each of the carcass plies has a carcass ply strength defined by a product (F × N × E*), and
in a boundary portion between the tread portion and each sidewall portion, the sum of the carcass ply strengths of all the carcass plies is preferably not less than 200,000.

### Effects of the Invention

In the pneumatic tire according to the present invention, since the carcass plies include the first carcass ply and the second carcass ply which have the same ply length, it is possible to use the same ply material for at least the first and second carcass plies, and as a result, the manufacturing cost can be reduced. Further, since the pneumatic tire has at least two carcass plies, the tire is provided with excellent cut resistance.

In the pneumatic tire according to the present invention, since the first carcass ply and the second carcass ply are each arranged asymmetrically with respect to the equator of the tire, there is no possibility that the edges of the first carcass ply 7A respectively overlap with the edges of the second carcass ply 7B. Therefore, stress can be dispersed, and durability can be improved.

Thus, the pneumatic tire according to the present invention can be reduced in the manufacturing cost while maintaining good cut resistance and durability.

### Brief description of the drawings

Fig. 1 is a schematic cross-sectional view of a pneumatic tire as an illustrative example not being according to the present invention.
Fig. 2 is a schematic cross-sectional view of a pneumatic tire as a second embodiment of the present invention.
Fig. 3 is a schematic cross-sectional view of a pneumatic tire as a third embodiment of the present invention.

### Description of Preferred Embodiments

Hereinafter, embodiments of the present invention will be described in detail with reference to the drawings.

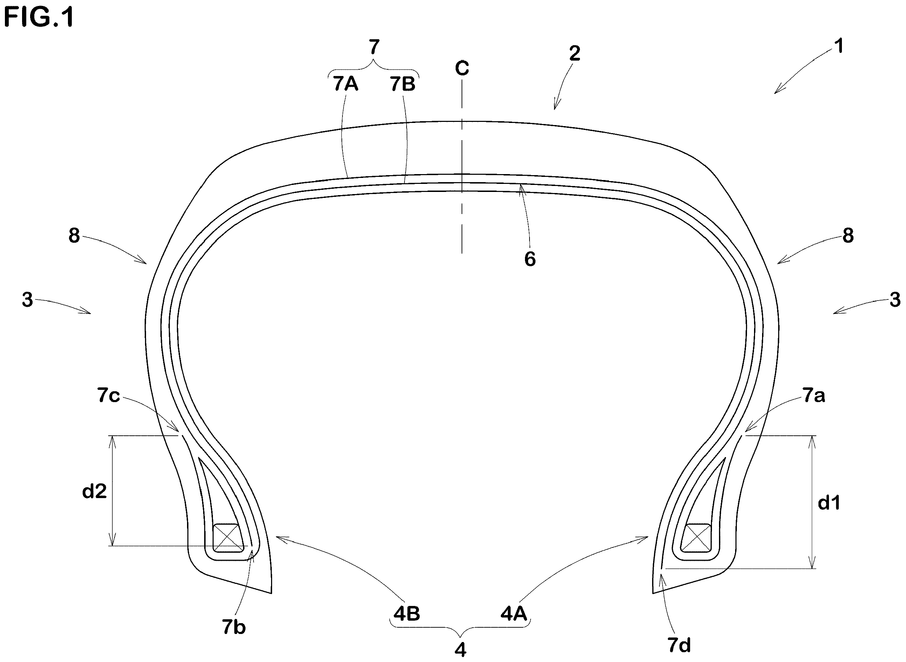

Fig. 1 is a schematic cross-sectional view including a tire rotational axis (not shown), of a pneumatic tire 1 as an illustrative example not being according to the present invention.

As shown in Fig. 1, the tire 1 has a tread portion 2 which comes into contact with the ground, a pair of axially spaced bead portions 4, and a pair of sidewall portions 3 extending from tread edges of the tread portion 2 to the bead portions 4. The bead portions 4 include a first bead portion 4A and a second bead portion 4B.

The tire 1 is provided with a carcass 6 extending between the first bead portion 4A and the second bead portion 4B through the tread portion 2 and the sidewall portions 3. In order to reinforce the tread portion, the tread portion 2 may be provided with, for example, a belt (not shown) arranged radially outside the carcass 6 and a band (not shown) arranged radially outside the belt.

In this example, the carcass 6 is composed of at least two carcass plies 7. since each sidewall portion 3 of such tire 1 is reinforced by the at least two carcass plies 7, the tire is provided with excellent cut resistance in the sidewall portions 3.

The carcass plies 7 in this example include a first carcass ply 7A and a second carcass ply 7B having the same ply length.

Here, the ply length of a carcass ply means the length measured from one of edges thereof to the other of the edges along the carcass ply in a cross section of the tire as shown in Figs. 1-3.

when considered in the tread portion, the second carcass ply 7B is arranged radially inside the first carcass ply 7A. In such tire 1, since the at least two carcass plies have the same ply length,
these can be formed from the same ply materials, and the manufacturing cost can be reduced.

Each of the first carcass ply 7A and the second carcass ply 7B of this example is arranged asymmetrically with respect to the tire equator C. Therefore, there is no possibility that the edges of the first carcass ply 7A respectively overlap with the edges of the second carcass ply 7B. Thus, stress can be dispersed, and durability can be improved. Therefore, the tire 1 of this example can be reduced in the manufacturing cost while maintaining good cut resistance and durability.

Incidentally, the tire equator C is the central position in the tire axial direction, of the ground contacting patch when the tire in a normal state contacts a flat plane at a camber angle of zero under a normal tire load.

Here, the "normal state" is a state in which the tire is mounted on a normal rim and inflated to a normal pressure without tire load.

The normal rim is a wheel rim officially approved or recommended for the tire by standards organizations, i.e. JATMA (Japan and Asia), T&RA (North America), ETRTO (Europe), TRAA (Australia), STRO (Scandinavia), ALAPA (Latin America), ITTAC (India) and the like which are effective in the area where the tire is manufactured, sold or used.

The normal pressure and the normal tire load are the maximum air pressure and the maximum tire load for the tire specified by the same organization in the Air-pressure/Maximum-load Table or similar list.

For example, the normal rim is the "standard rim" specified in JATMA, the "Measuring Rim" in ETRTO, the "Design Rim" in TRA or the like. The normal tire pressure is the "maximum air pressure" in JATMA, the "Inflation Pressure" in ETRTO, the maximum pressure given in the "Tire Load Limits at various Cold Inflation Pressures" table in TRA or the like. The normal tire load is the "maximum load capacity" in JATMA, the "Load capacity" in ETRTO, the maximum value given in the above-mentioned table in TRA or the like.

As to the normal rim, normal tire pressure and normal tire load, if there is no standard to be applied to the tire in the standards organization, those specified by the tire manufacturer should be adopted.

Each carcass ply 7 is composed of carcass cords (not shown) rubberized with a topping rubber (not shown).

It is preferable that, in a buttress portion 8 which is a boundary portion between the tread portion 2 and each sidewall portion 3, the carcass 6 has a carcass strength of not less than 200000, preferably not less than 250000, more preferably not less than 300000, wherein
the carcass strength is the sum of ply strengths of all the carcass plies 7 constituting the carcass, and
the ply strength of each carcass ply is a product (F × N × E) of a cord strength F (N) of a carcass cord, a cord count N of the carcass cords per 5 cm, and a complex elastic modulus E* (MPa) of the topping rubber at 70 degrees C.

By setting the carcass strength 200000 or more, cut resistance sufficient for running on rough roads can be provided.

Here, the complex elastic modulus E* is measured in accordance Japanese Industrial standard (JIS) K6394 under the following conditions, using a dynamic viscoelasticity measuring device.
Initial strain: 10%
Amplitude: +/-1%
Frequency: 10Hz
Measuring mode: tensile deformation
Measurement temperature: 70 degrees C

In this example the first carcass ply 7A is folded back radially outwardly in the first bead portion 4A so as to have a folded-back portion having a first edge 7a, and the first carcass ply 7A has a second edge 7b located in the second bead portion 4B and radially inside the first edge 7a. since the first carcass ply 7A can be decreased in the ply length, the weight can be reduced, and the fuel efficiency performance of the tire 1 can be improved.

In this example the first carcass ply 7A is not folded back in the second bead portion 4B. since such first carcass ply 7A is further decreased in the weight, it is possible to further improve the fuel efficiency of the tire 1. However, it is also possible that the first carcass ply 7A is folded back in the second bead portion 4B so as to have a folded-back portion having the above-said second edge 7b located radially inside the first edge 7a.

In this example the second carcass ply 7B is folded back in the second bead portion 4B so as to have a folded-back portion having a third edge 7c, and the second carcass ply 7B has a fourth edge 7d located in the first bead portion 4A and radially inside the third edge 7c. since the second carcass ply 7B can be decreased in the ply length, the weight can be reduced, and the fuel efficiency of the tire 1 can be improved.

In this example the second carcass ply 7B is not folded back in the first bead portion 4A. since such second carcass ply 7B can be decreased in the weight, the fuel efficiency of the tire 1 can be further improved.

However, it is also possible that the second carcass ply 7B is folded back in the first bead portion 4A so as to have a folded-back portion having the above-said fourth edge 7d located radially inside the third edge 7c.

The first edge 7a and the third edge 7c may be located at the same radial height. In this case, it is desirable that the second edge 7b and the fourth edge 7d are located at the same radial height.

The carcass having such carcass plies 7 has a good balance in the tire axial direction and can improve the steering stability of the tire 1.

Preferably, the distance d1 in the tire radial direction between the first edge 7a and the fourth edge 7d is not less than 10 mm. when the distance d1 is not less than 10 mm, the stress at the first edge 7a and the stress at the fourth edge 7d can be dispersed, and thereby the durability of the tire 1 can be improved.

From this point of view, the distance d1 is more preferably not less than 15 mm, still more preferably not less than 20 mm.

Preferably, the distance d2 in the tire radial direction between the second edge 7b and the third edge 7c is not less than 10 mm. when the distance d2 is not less than 10 mm, the stress at the second edge 7b and the stress at the third edge 7c can be dispersed, and thereby the durability of the tire 1 can be improved.

From this point of view, the distance d2 is more preferably not less than 15 mm, still more preferably not less than 20 mm.

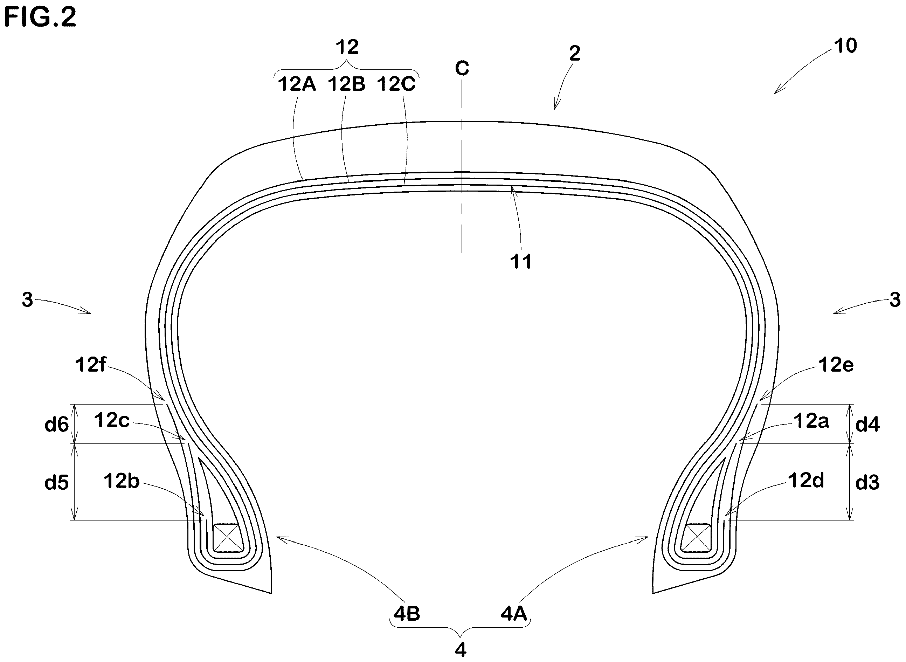

Fig. 2 is a schematic cross-sectional view including a tire rotational axis (not shown), of a pneumatic tire 10 as a second embodiment of the present invention.

Elements or components having the same functions as those in the above-described first embodiment are designated by the same reference numerals, and the description thereof will be omitted.

As shown in Fig. 2, the tire 10 in the second embodiment comprises a tread portion 2, a pair of sidewall portions 3, and a pair of bead portions 4 including a second bead portion 4B and a second bead portion 4B, similarly to the tire 1 described above.

The tire 10 is provided with a carcass 11 extending between the first bead portion 4A and the second bead portion 4B through the tread portion 2 and the sidewall portions 3. similar to the tire 1 described above, the tread portion 2 of the tire 10 may be provided with a belt (not shown) disposed radially outside the carcass 11, and a band (not shown) disposed radially outside the belt.

The carcass 11 of the second embodiment is composed of three carcass plies 12. since each sidewall portion 3 of such tire 10 is reinforced by the at least three carcass plies 7, the sidewall portions 3 can be provided with excellent cut resistance.

In the second embodiment, the carcass plies 12 include a first carcass ply 12A and a second carcass ply 12B which have the same ply length. when considered in the tread portion, the second carcass ply 12B is arranged radially inside the first carcass ply 12A. In such tire 10, since the two carcass plies 12 have the same ply length, these can be formed from the same ply materials, and the manufacturing cost can be reduced.

In second embodiment, the carcass plies 12 further include a third carcass ply 12c which is, in the tread portion, arranged radially inside the first carcass ply 12A and the second carcass ply 12B. such tire 10 can achieve both cut resistance due to the three carcass plies 12 and low fuel consumption due to the reduces weight.

Each of the first carcass ply 12A and the second carcass ply 12B of the second embodiment are arranged asymmetrically with respect to the tire equator C. Therefore, there is no possibility that the edges of the first carcass ply 12A respectively overlap with the edges of the second carcass ply 12B. Thus, stress can be dispersed, and durability can be improved. Therefore, the tire 10 of the second embodiment can be reduced in the manufacturing cost while maintaining good cut resistance and durability, similarly to the tire 1 described above.

In the second embodiment, the first carcass ply 12A is folded back radially outwardly in the first bead portion 4A so as to have a folded-back portion having a first edge 12a, and the first carcass ply 12A has a second edge 12b located in the second bead portion 4B and radially inside the first edge 12a. since the ply length of the first carcass ply 12A is decreased, the weight can be reduced, and the fuel efficiency of the tire 10 can be improved.

In the second embodiment, the first carcass ply 12A is folded back radially outwardly in the second bead portion 4B so as to have a folded-back portion having the above-said second edge 12b located radially inside the first edge 12a.
such first carcass ply 12A can achieve both good fuel efficiency due to the weight reduction and improved durability due to improvement in rigidity of the bead portions 4.

In the second embodiment, the second carcass ply 12B is folded back radially outwardly in the second bead portion 4B so as to have a folded-back portion having a third edge 12c, and the second carcass ply 12B has a fourth edge 12d located in the first bead portion 4A and radially inside the third edge 12c. since the ply length of the second carcass ply 12B is reduced, the weight can be reduced, and the fuel efficiency of the tire 10 can be improved.

In the second embodiment, the second carcass ply 12B is folded back radially outwardly in the first bead portion 4A so as to have a folded-back portion having the above-said fourth edge 12d located radially inside the third edge 12c.
such second carcass ply 12B can achieve both good fuel efficiency due to the weight reduction and improved durability due to improvement in rigidity of the bead portions 4.

It is desirable that the first edge 12a and the third edge 12c are located at the same radial height.

Further, it is desirable that the second edge 12b and the fourth edge 12d are located at the same radial height.

The carcass having such carcass plies 12 has a good balance in the tire axial direction and can improve the steering stability of the tire 10.

In the second embodiment, the third carcass ply 12c is folded back radially outwardly in the first bead portion 4A so as to have a folded-back portion having a fifth edge 12e, and the third carcass ply 12c is folded back radially outwardly in the second bead portion 4B so as to have a folded-back portion having a sixth edge 12f. such third carcass ply 12c can improve the rigidity of the bead portion 4 and can improve the durability of the tire 10.

It is desirable that the fifth edge 12e and the sixth edge 12f are located at the same radial height. The carcass having such carcass plies 12 has a good balance in the tire axial direction and can improve the steering stability of the tire 10.

In the second embodiment, the fifth edge 12e and the sixth edge 12f are located radially outside the first edge 12a and the third edge 12c. In such carcass 11, the first edge 12a, the second edge 12b, the third edge 12c, and the fourth edge 12d are covered with the third carcass ply 12c, therefore, it is possible to further improve the durability of the tire 10.

Preferably, the distance d3 in the tire radial direction between the first edge 12a and the fourth edge 12d is not less than 10 mm.

Preferably, the distance d4 in the tire radial direction between the first edge 12a and the fifth edge 12e is not less than 10 mm. when the distance d3 and the distance d4 are not less than 10 mm, the stress at the first edge 12a, the stress at the fourth edge 12d, and the stress at the fifth edge 12e can be dispersed, and the durability of the tire 10 can be improved.

From such a viewpoint, the distance d3 and the distance d4 are more preferably not less than 15 mm, and further preferably not less than 20 mm.

Preferably, the distance d5 in the tire radial direction between the second edge 12b and the third edge 12c is not less than 10 mm.

Preferably, the distance d6 in the tire radial direction between the third edge 12c and the sixth edge 12f is not less than 10 mm. when the distance d5 and the distance d6 are not less than 10 mm, the stress at the second edge 12b, the stress at the third edge 12c, and the stress at the sixth edges 12f can be dispersed, and the durability of the tire 10 can be improved.

From such a viewpoint, the distance d5 and the distance d6 are more preferably not less than 15 mm, and more preferably not less than 20 mm.

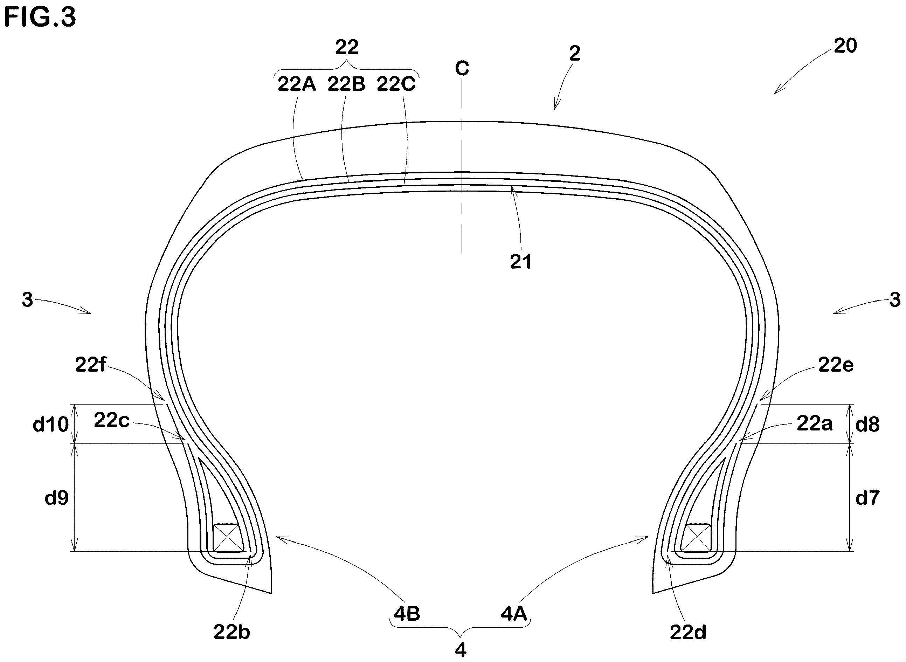

Fig. 3 is a schematic cross-sectional view including a tire rotational axis (not shown), of a pneumatic tire 20 as a third embodiment of the present invention.

Elements or components having the same functions as those in the above-described first and second embodiments are designated by the same reference numerals, and the description thereof will be omitted.

As shown in Fig. 3, the tire 20 has a tread portion 2, a pair of sidewall portions 3, and a pair of bead portions 4 including a second bead portion 4B and a second bead portion 4B, similarly to the tire 1 described above.

The tire 20 is provided with a carcass 21 extending between the first bead portion 4A and the second bead portion 4B through the tread portion 2 and the sidewall portions 3 similar to those of the tire 1 described above.
similar to the tire 1 described above, the tread portion 2 of the tire 20 may be provided with a belt (not shown) disposed radially outside the carcass 21, and a band (not shown) disposed radially outside the belt.

In the third embodiment, the carcass 21 is composed of three carcass plies 22. since each sidewall portion 3 of such tire 20 is reinforced by the three carcass plies 22, the sidewall portions 3 can be provided with excellent cut resistance.

The carcass plies 22 include a first carcass ply 22A and a second carcass ply 22B which have the same ply length.

The second carcass ply 22B is, in the tread portion, arranged radially inside the first carcass ply 22A.

In such tire 20, since the two carcass plies 22 have the same ply length, these can be formed from the same ply materials, and the manufacturing cost can be reduced.

The carcass plies 22 of the third embodiment further include a third carcass ply 22c.

The third carcass ply 22c is, in the tread portion, arranged radially inside the first carcass ply 22A and the second carcass ply 22B. The tire 20 having such carcass plies 22 can achieve both cut resistance due to the three carcass plies 22 and low fuel consumption due to weight reduction.

Each of the first carcass ply 22A and the second carcass ply 22B of the third embodiment is arranged asymmetrically with respect to the tire equator C. In such tire 20, there is no possibility that the edges of the first carcass ply 22A respectively overlap with the edges of the second carcass ply 22B. Thus, stress can be dispersed, and durability can be improved. Therefore, the tire 20 of the third embodiment can be reduced in the manufacturing cost while maintaining good cut resistance and durability, similarly to the tire 1 described above.

In the third embodiment, the first carcass ply 22A is folded back radially outwardly in the first bead portion 4A so as to have a folded-back portion having a first edge 22a, and the first carcass ply 22A has a second edge 22b located in the second bead portion 4B and radially inside the first edge 22a. since the ply length of the first carcass ply 22A can be reduced, the weight can be reduced, and the fuel efficiency of the tire 20 can be improved.

In the third embodiment, the first carcass ply 22A is not folded back in the second bead portion 4B. since such first carcass ply 22A can be decreased in the weight, the fuel efficiency of the tire 20 can be further improved.

In the third embodiment, the second carcass ply 22B is folded back radially outwardly in the second bead portion 4B so as to have a folded-back portion having a third edge 22c, and the second carcass ply 22B has a fourth edge 22d located in the first bead portion 4A and radially inside the third edge 22c. since the ply length of the second carcass ply 22B can be reduced, the weight can be reduced, and the fuel efficiency of the tire 20 can be improved.

In the third embodiment, the second carcass ply 22B is not folded back in the first bead portion 4A. since such second carcass ply 22B can be reduced in the weight, the fuel efficiency of the tire 20 can be further improved.

It is desirable that the first edge 22a and the third edge 22c are located at the same radial height.

It is desirable that the second edge 22b and the fourth edge 22d are located at the same radial height.

The tire having such carcass plies 22 has a good balance in the tire axial direction as a whole, and can improve the steering stability of the tire 20.

In the third embodiment, the third carcass ply 22c is folded back radially outwardly in the first bead portion 4A so as to have a folded-back portion having a fifth edge 22e, and the third carcass ply 22c is folded back radially outwardly in the second bead portion 4B so as to have a folded-back portion having a sixth edge 22f. such third carcass ply 22C can increase the rigidity of the bead portions 4 and can improve the durability of the tire 20.

According to the invention, the fifth edge 22e and the sixth edges 22f are located at the same radial height. The carcass having such carcass plies 22 has a good balance in the tire axial direction as a whole, and can improve the steering stability of the tire 20.

In the third embodiment, the fifth edge 22e and the sixth edges 22f are located radially outside the first edge 22a and the third edge 22c. In such carcass 21, the first edge 22a, the second edge 22b, the third edge 22c, and the fourth edge 22d are covered with the third carcass ply 22c, therefore, the durability of the tire 20 can be further improved.

Preferably, the distance d7 in the tire radial direction between the first edge 22a and the fourth edge 22d is not less than 10 mm.

Preferably, the distance d8 in the tire radial direction between the first edge 22a and the fifth edge 22e is not less than 10 mm. when the distance d7 and the distance d8 are not less than 10 mm, the stress at the first edge 22a, the stress at the fourth edge 22d, and the stress at the fifth edge 22e can be dispersed, and the durability of the tire 20 can be improved.

From this point of view, the distance d7 and the distance d8 are more preferably not less than 15 mm, still more preferably not less than 20 mm.

Preferably, the distance d9 in the tire radial direction between the second edge 22b and the third edge 22c is not less than 10 mm.

Preferably, the distance d10 in the tire radial direction between the third edge 22c and the sixth edge 22f is not less than 10 mm.
when the distance d9 and the distance d10 are not less than 10 mm, the stress at the second edge 22b, the stress at the third edge 22c, and the stress at the sixth edges 22f can be dispersed, and the durability of the tire 20 can be improved.

From this point of view, the distance d9 and the distance d10 are more preferably not less than 15 mm, still more preferably not less than 20 mm.

while detailed description has been made of preferable embodiments of the present invention, the present invention can be embodied in various forms without being limited to the illustrated embodiments without departing from the scope of the appended claims.

### Comparison tests

Based on the structure shown in Fig. 1, pneumatic tires as working example 1 and working example 2 were experimentally manufactured.

Further, a pneumatic tire as a Comparative example 1 having a carcass composed of two types of carcass plies having different ply lengths, and
a pneumatic tire as a Comparative Example 2 having a carcass composed of two carcass plies having the same ply length and edges all located at the same radial height
were experimentally manufactured.

These test tires were tested for the cut resistance, durability and fuel efficiency.

specifications of the test tires are shown in Table 1.

Common specification and test methods are as follows.
Tire size: LT285/75R17
Rim size: 17×7.5J
Air pressure: 450kPa

### < cut resistance >

Each test tire was attached to all wheels of a test car (large-size four-wheel drive car), and the test car was traveled on a rocky terrain for 1000 km.

Then, the cut resistance was comprehensively evaluated based on cut scratches caused in the buttress portions.

The results are indicated in Table 1 by an index based on Comparative Example 1 being 100, wherein the larger the value, the better the cut resistance.

### < Durability >

using a drum type tire tester, a run-able distance until the test tire was broken was measured.

The results are indicated in Table 1 by an index based on Comparative Example 1 being 100, wherein the larger the value, the better the durability.

### < Fuel efficiency >

The weight of each test tire was measured.

The results are indicated in Table 1 by an index based on Comparative Example 1 being 100, wherein the larger the value, the lighter the tire weight and the better the fuel efficiency.

**Table 1**

| tire | comparative example 1 | comparative example 2 | working example 1 | working example 2 |
|---|---|---|---|---|
| number of Carcass plies | 2 | 2 | 2 | 2 |
| first and second carcass plies | symmetric | symmetric | asymmetric | asymmetric |
| locations of second and fourth edges *1 | F | F | N | F |
| d1 (mm) | 15 | 0 | 115 | 15 |
| d2 (mm) | 15 | 0 | 115 | 15 |
| number of carcass ply types | 2 | 1 | 1 | 1 |
| Cut resistance | 100 | 100 | 100 | 100 |
| Durability | 100 | 80 | 90 | 100 |
| Fuel efficiency | 100 | 100 | 110 | 100 |

| | | | | |
|---|---|---|---|---|
| *1 ) F: the second and fourth edges were located at the radially outer ends of the respective folded-back portions. N: the second and fourth edges were located at the respective not-folded carcass ply end portions. | | | | |

Further, based on the structures shown in FIGS. 2 and 3, pneumatic tires were experimentally manufactured as working example 3 and working example 4.

And a pneumatic tire as comparative Example 3 having a carcass composed of three types of carcass plies having different ply lengths was experimentally manufactured.

These test tires were tested for the cut resistance, durability and fuel efficiency as explained above.

Specifications of these test tires and test results are shown in Table 2.

**Table 2**

| tire | comparative example 3 | working example 3 | working example 4 |
|---|---|---|---|
| number of Carcass plies | 3 | 3 | 3 |
| first and second carcass plies | symmetric | asymmetric | asymmetric |
| locations of second and fourth edges *1 | F | F | N |
| d3, d7 (mm) | 80 | 80 | 20 |
| d4, d8 (mm) | 15 | 15 | 95 |
| d5, d9 (mm) | 80 | 80 | 20 |
| d6, d10 (mm) | 15 | 15 | 95 |
| number of carcass ply types | 3 | 2 | 2 |
| Cut resistance | 140 | 140 | 140 |
| Durability | 110 | 110 | 100 |
| Fuel efficiency | 80 | 80 | 90 |

| | | | |
|---|---|---|---|
| *1 ) F: the second and fourth edges were located at the radially outer ends of the respective folded-back portions. N: the second and fourth edges were located at the respective not-folded carcass ply end portions. | | | |

From the test results, it was confirmed that as compared with the comparative example tires, the pneumatic tires according to the present invention were reduced in the manufacturing cost because the number of types of the carcass ply materials was reduced while maintaining comparable cut resistance, durability and fuel efficiency.

### Description of the reference signs

- 1: pneumatic tire
- 2: tread portion
- 3: sidewall portion
- 4A: first bead portion
- 4B: second bead portion
- 6: carcass
- 7: carcass ply
- 7A: first carcass ply
- 7B: second carcass ply

## Claims

1. A pneumatic tire (1) comprising:
a tread portion (2),
a pair of sidewall portions (3),
a pair of axially spaced first and second bead portions (4A,4B), and
a carcass (6) extending between the first and second bead portions (4A,4B) through the tread portion (2) and the sidewall portions (3),
wherein
the carcass (6) is composed of a plurality of carcass plies including a first carcass ply (7A,12A,22A) having a ply length, and a second carcass ply (7B,12B,22B) having a ply length which is the same as the ply length of the first carcass ply (7A,12A,22A), and
each of the first carcass ply (7A,12A,22A) and the second carcass ply (7B,12B,22B) is arranged asymmetrically with respect to a tire equator (C), wherein
the first carcass ply (7A,12A,22A) is folded back radially outwardly in the first bead portion (4A) so as to have a folded-back portion having a first edge (7a,12a,22a), and the first carcass ply (7A,12A,22A) has a second edge (7b,12b,22b) positioned in the second bead portion (4B) and radially inside the first edge (7a,12a,22a), wherein
the carcass (6) further comprises a third carcass ply (12C,22C) which is, in the tread portion (2), located radially inside the first carcass ply (7A,12A,22A) and the second carcass ply (7B,12B,22B), wherein
the third carcass ply (12C,22C) is folded back radially outwardly in the first bead portion (4A) so as to have a folded-back portion having a fifth edge (7e,12e,22e), and the third carcass ply (12C,22C) is folded back radially outwardly in the second bead portion (4B) so as to have a folded-back portion having a sixth edge (7f,12f,22f), **characterized in that**
the fifth edge (7e,12e,22e) and the sixth edge (7f,12f,22f) are located at the same radial height.

2. The pneumatic tire (1) according to claim 1, wherein
the first carcass ply (7A,22A) is not folded back in the second bead portion (4B).

3. The pneumatic tire (1) according to claim 1, wherein
the first carcass ply (12A) is folded back in the second bead portion (4B) so as to have a folded-back portion having the above-said second edge (12b) which is positioned radially inside the first edge (12a).

4. The pneumatic tire according to any one of claims 1 to 3, wherein
the second carcass ply (7B,12B,22B) is folded back radially outwardly in the second bead portion (4B) so as to have a folded-back portion having a third edge (7c,12c,22c), and the second carcass ply (7B,12B,22B) has a fourth edge (7d,12d,22d) positioned in the first bead portion (4A) and radially inside the third edge (7c,12c,22c).

5. The pneumatic tire (1) according to claim 4, wherein
a distance in the tire radial direction between the first edge (7a,12a,22a) and the fourth edge (7d,12d,22d) is not less than 10 mm.

6. The pneumatic tire (1) according to one of claims 1 to 5, wherein
the fifth edge (7e,12e,22e) and the sixth edge (7f,12f,22f) are located radially outside the first edge (7a,12a,22a).

7. The pneumatic tire (1) according to any one of claims 1 to 6, wherein
each of the carcass plies is composed of carcass cords rubberized with a topping rubber, wherein the carcass cords each have a cord strength F (N), the carcass cords are arranged side by side with a cord count N per 5 cm, the topping rubber has a complex elastic modulus E* (MPa) at 70 degrees C, and
each of the carcass plies has a carcass ply strength defined by a product (F × N × E*),
in a boundary portion between the tread portion (2) and each sidewall portion (3), the sum of the carcass ply strengths of all the carcass plies is not less than 200,000, and wherein the complex elastic modulus being measured according to JIS K6394 using a dynamic viscoelasticity measuring device under the conditions of 10% initial strain, +/-1% amplitude, a 10 Hz frequency and a tensile deformation measuring mode.

## Patentansprüche

1. Luftreifen (1), umfassend:
einen Laufflächenabschnitt (2),
ein Paar Seitenwandabschnitte (3),
ein Paar axial beabstandete erste und zweite Wulstabschnitte (4A, 4B), und
eine Karkasse (6), die sich zwischen dem ersten und zweiten Wulstabschnitt (4A, 4B) durch den Laufflächenabschnitt (2) und die Seitenwandabschnitte (3) erstreckt,
wobei
die Karkasse (6) aus einer Vielzahl von Karkasslagen zusammengesetzt ist, die eine erste Karkasslage (7A, 12A, 22A) mit einer Lagenlänge und einer zweiten Karkasslage (7B, 12B, 22B) mit einer Lagenlänge, die die gleiche ist wie die Lagenlänge der ersten Karkasslage (7A, 12A, 22A), umfassen, und
eine jede von der ersten Karkasslage (7A, 12A, 22A) und der zweiten Karkasslage (7B, 12B, 22B) asymmetrisch in Bezug auf einen Reifenäquator (C) angeordnet ist, wobei
die erste Karkasslage (7A, 12A, 22A) in dem ersten Wulstabschnitt (4A) radial nach außen zurückgeschlagen ist, so dass sie einen zurückgeschlagenen Abschnitt mit einer ersten Kante (7a, 12a, 22a) aufweist, und die erste Karkasslage (7A, 12A, 22A) eine zweite Kante (7b, 12b, 22b) aufweist, die in dem zweiten Wulstabschnitt (4B) und radial innen von der ersten Kante (7a, 12a, 22a) angeordnet ist, wobei
die Karkasse (6) ferner eine dritte Karkasslage (12C, 22C) umfasst, die in dem Laufflächenabschnitt (2) radial innen von der ersten Karkasslage (7A, 12A, 22A) und der zweiten Karkasslage (7B, 12B, 22B) angeordnet ist, wobei
die dritte Karkasslage (12C, 22C) in dem ersten Wulstabschnitt (4A) radial nach außen zurückgeschlagen ist, so dass sie einen zurückgeschlagenen Abschnitt mit einer fünften Kante (7e, 12e, 22e) aufweist, und die dritte Karkasslage (12C, 22C) in dem zweiten Wulstabschnitt (4B) radial nach außen zurückgeschlagen ist, so dass sie einen zurückgeschlagenen Abschnitt mit einer sechsten Kante (7f, 12f, 22f) aufweist,
**dadurch gekennzeichnet, dass**
die fünfte Kante (7e,12e,22e) und die sechste Kante (7f,12f,22f) auf der gleichen radialen Höhe angeordnet sind.

2. Luftreifen (1) nach Anspruch 1, wobei die erste Karkasslage (7A, 22A) in dem zweiten Wulstabschnitt (4B) nicht zurückgeschlagen ist.

3. Luftreifen (1) nach Anspruch 1, wobei die erste Karkasslage (12A) in dem zweiten Wulstabschnitt (4B) zurückgeschlagen ist, so dass ein zurückgeschlagener Abschnitt mit der oben genannten zweiten Kante (12b) entsteht, die radial innen von der ersten Kante (12a) positioniert ist.

4. Luftreifen nach einem der Ansprüche 1 bis 3, wobei die zweite Karkasslage (7B, 12B, 22B) in dem zweiten Wulstabschnitt (4B) radial nach außen zurückgeschlagen ist, so dass sie einen zurückgeschlagenen Abschnitt mit einer dritten Kante (7c, 12c, 22c) aufweist, und die zweite Karkasslage (7B, 12B, 22B) eine vierte Kante (7d, 12d, 22d) aufweist, die in dem ersten Wulstabschnitt (4A) und radial innen von der dritten Kante (7c, 12c, 22c) positioniert ist.

5. Luftreifen (1) nach Anspruch 4, wobei ein Abstand in der radialen Richtung des Reifens zwischen der ersten Kante (7a, 12a, 22a) und der vierten Kante (7d, 12d, 22d) nicht weniger als 10 mm beträgt.

6. Luftreifen (1) nach einem der Ansprüche 1 bis 5, wobei die fünfte Kante (7e, 12e, 22e) und die sechste Kante (7f, 12f, 22f) radial außen von der ersten Kante (7a, 12a, 22a) angeordnet sind.

7. Luftreifen (1) nach einem der Ansprüche 1 bis 6, wobei eine jede der Karkasslagen aus Karkasskorden zusammengesetzt ist, die mit einem Deckgummi gummiert sind, wobei die Karkasskorde jeweils eine Kordfestigkeit F (N) aufweisen, die Karkasskorde mit einer Kordzahl N pro 5 cm nebeneinander angeordnet sind, der Deckgummi einen komplexen Elastizitätsmodul E* (MPa) bei 70 Grad C aufweist, und
eine jede der Karkasslagen eine Karkasslagenfestigkeit aufweist, die durch ein Produkt (F × N × E*) definiert ist,
in einem Grenzbereich zwischen dem Laufflächenabschnitt (2) und jedem Seitenwandabschnitt (3) die Summe der Karkasslagenfestigkeiten aller Karkasslagen nicht weniger als 200.000 beträgt, und wobei der komplexe Elastizitätsmodul gemäß JIS K6394 unter Verwendung einer dynamischen Viskoelastizitätsmessvorrichtung unter den Bedingungen von 10 % Anfangsdehnung, ±1 % Amplitude, einer Frequenz von 10 Hz und einem Zugverformungsmessmodus gemessen ist.

## Revendications

1. Bandage pneumatique (1) comprenant :
une portion formant bande de roulement (2),
une paire de portions formant parois latérales (3),
une paire de première et de seconde portion de talon (4A, 4B) espacées axialement, et
une carcasse (6) s'étendant entre la première et la seconde portion de talon (4A, 4B) à travers la portion formant bande de roulement (2) et les portions formant parois latérales (3),
dans lequel
la carcasse (6) est composée d'une pluralité de nappes de carcasse incluant une première nappe de carcasse (7A, 12A, 22A) ayant une longueur de nappe, et une deuxième nappe de carcasse (7B, 12B, 22B) ayant une longueur de nappe qui est la même que la longueur de nappe de la première nappe de carcasse (7A, 12A, 22A), et
chacune de la première nappe de carcasse (7A, 12A, 22A) et de la deuxième nappe de carcasse (7B, 12B, 22B) est agencée de manière asymétrique par rapport à un équateur de pneumatique (C), dans lequel
la première nappe de carcasse (7A, 12A, 22A) est repliée vers l'arrière radialement à l'extérieur dans la première portion de talon (4A) de manière à avoir une portion repliée vers l'arrière ayant un premier bord (7a, 12a, 22a), et la première nappe de carcasse (7A, 12A, 22A) a un deuxième bord (7b, 12b, 22b) positionné dans la seconde portion de talon (4B) et radialement à l'intérieur du premier bord (7a, 12a, 22a), dans lequel
la carcasse (6) comprend en outre une troisième nappe de carcasse (12C, 22C) qui est, dans la portion formant bande de roulement (2), située radialement à l'intérieur de la première nappe de carcasse (7A, 12A, 22A) et de la deuxième nappe de carcasse (7B, 12B, 22B), dans lequel
la troisième nappe de carcasse (12C, 22C) est repliée vers l'arrière radialement à l'extérieur dans la première portion de talon (4A) de manière à avoir une portion repliée vers l'arrière ayant un cinquième bord (7e, 12e, 22e), et la troisième nappe de carcasse (12C, 22C) est repliée vers l'arrière radialement à l'extérieur dans la seconde portion de talon (4B) de manière à avoir une portion repliée vers l'arrière ayant un sixième bord (7f, 12f, 22f),
**caractérisé en ce que**
le cinquième bord (7e, 12e, 22e) et le sixième bord (7f, 12f, 22f) sont situés à la même hauteur radiale.

2. Bandage pneumatique (1) selon la revendication 1, dans lequel la première nappe de carcasse (7A, 22A) n'est pas repliée vers l'arrière dans la seconde portion de talon (4B).

3. Bandage pneumatique (1) selon la revendication 1, dans lequel la première nappe de carcasse (12A) est repliée vers l'arrière dans la seconde portion de talon (4B) de manière à avoir une portion repliée vers l'arrière ayant le deuxième bord (12b) précité qui est positionné radialement à l'intérieur du premier bord (12a).

4. Bandage pneumatique selon l'une quelconque des revendications 1 à 3, dans lequel
la deuxième nappe de carcasse (7B, 12B, 22B) est repliée vers l'arrière radialement à l'extérieur dans la seconde portion de talon (4B) de manière à avoir une portion repliée vers l'arrière ayant un troisième bord (7c, 12c, 22c), et la deuxième nappe de carcasse (7B, 12B, 22B) a un quatrième bord (7d, 12d, 22d) positionné dans la première portion de talon (4A) et radialement à l'intérieur du troisième bord (7c, 12c , 22c).

5. Bandage pneumatique (1) selon la revendication 4, dans lequel une distance dans la direction radiale du pneumatique entre le premier bord (7a, 12a, 22a) et le quatrième bord (7d, 12d, 22d) n'est pas inférieure à 10 mm.

6. Bandage pneumatique (1) selon l'une quelconque des revendications 1 à 5, dans lequel
le cinquième bord (7e, 12e, 22e) et le sixième bord (7f, 12f, 22f) sont situés radialement à l'extérieur du premier bord (7a, 12a, 22a).

7. Bandage pneumatique (1) selon l'une quelconque des revendications 1 à 6, dans lequel
chacune des nappes de carcasse est composée de câblés de carcasse caoutchoutés avec un caoutchouc d'enrobage, dans lequel les câblés de carcasse ont chacun une résistance de câblés F (N), les câblés de carcasse sont agencés côte à côte avec un nombre N de câblés par 5 cm, le caoutchouc d'enrobage a un module d'élasticité complexe E* (MPa) à 70 degrés C, et chacune des nappes de carcasse a une résistance de nappe de carcasse définie par un produit (F × N × E*),
dans une portion de frontière entre la portion formant bande de roulement (2) et chaque portion formant paroi latérale (3), la somme des résistances de nappes de carcasse de la totalité des nappes de carcasse n'est pas inférieure à 200000, et dans lequel le module d'élasticité complexe est mesuré en accord avec la norme industrielle japonaise JIS K6394 à l'aide d'un dispositif de mesurage de viscoélasticité dynamique sous les conditions de 10 % de contrainte initiale, +/-1 % d'amplitude, 10 Hz de fréquence et un mode de mesurage de déformation en traction.
